# FASCICULE DE BREVET EUROPEEN

(11) **EP 1 794 028 B1**
(45) Date de publication et mention de la délivrance du brevet: **11.03.2009**
(21) Numéro de dépôt: 05804285.4
(22) Date de dépôt: 27.09.2005
(51) Int. Cl.: B60P 1/28, B60R 13/01

(54) **BENNE POUR MATIERES GRANULAIRES**
BEHÄLTER FÜR KÖRNIGE MATERIALIEN
SKIP FOR GRANULAR MATERIALS

(30) Priorité: 28.09.2004 FR 0410241
(43) Date de publication de la demande: 13.06.2007
(73) Titulaire: ALCAN RHENALU, 75116 Paris (FR)
(72) Inventeur: FRIDRICI, Vincent, 69130 Ecully (FR); DUSSUD, Damien, 69380 Civrieux d'Azergues (FR); GUILLEMENET, Jérôme Bâtiment A., Appart. 111, 21121 Dijon (FR); ABRY, Jean-Christophe, 69510 Thurins (FR); MEILLE, Gérard, 69580 Sathonay Village (FR)
(74) Mandataire: Fénot, Dominique
(86) Numéro de dépôt international: PCT/FR2005/002388
(87) Numéro de publication internationale: WO 2006/035155

(56) Documents cités:
- WO-A-01/66301
- DE-A1- 1 452 592
- GB-A- 2 381 009
- US-A- 5 851 043
- US-A- 6 007 132
- US-A- 6 129 409
- US-A1- 2003 218 360
- PATENT ABSTRACTS OF JAPAN vol. 009, no. 070 (M-367), 30 mars 1985 (1985-03-30) & JP 59 202103 A (NAKAYAMA SEIKOSHO:KK), 15 novembre 1984 (1984-11-15)

## Description

### Domaine de l'invention

L'invention concerne une benne pour matières granulaires qui présente une résistance à l'abrasion améliorée.

### Etat de la technique

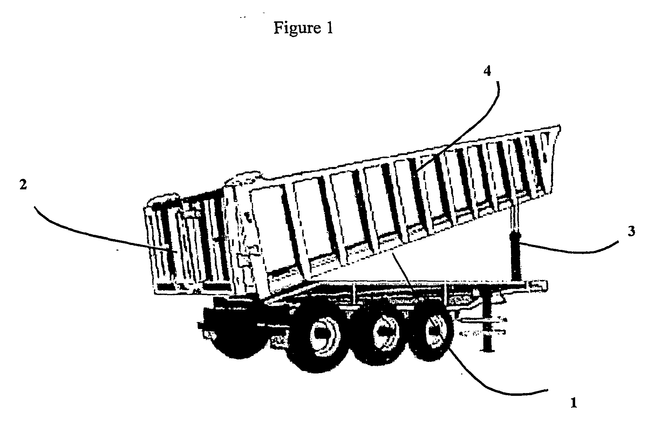

Une benne pour matières granulaires comporte le plus souvent un fond, typiquement un fond plat ou galbé, et une pluralité de parois latérales destinées à confiner la matière granulaire à transporter ; typiquement, une benne a une forme rectangulaire et comporte deux fois deux parois latérales, dont au moins une qui peut être ouverte pour décharger la matière granulaire par basculement de la benne (voir la figure 1). Un autre mode de construction est la forme dite en « demi-lune » comportant un fond galbe et des parois latérales, dont celle qui peut être ouverte pour décharger la matière granulaire peut avoir une forme galbée plus ou moins complexe. Il existe d'autres formes de benne, notamment celles qui permettent un déchargement par le fond. Ces bennes peuvent comporter en plus du fond et des parois des raidisseurs ou cadres extérieurs. Les parties des parois et du fond qui entrent en contact avec la matière granulaire sont habituellement lisses, pour que la matière granulaire glisse bien lors de son déchargement.

Les bennes pour matières granulaires sont déchargées typiquement par déversement : la benne est inclinée, et la matière granulaire s'écoule par une ouverture. Cette ouverture peut être une trappe latérale. L'écoulement peut aussi se faire par une ouverture dans le fond de la benne. Dans tous les cas, lors de cet écoulement, la matière granulaire glisse sur le fond de la benne. Cela conduit à une usure par abrasion. Cette usure du fond de la benne est plus forte à proximité de l'ouverture par laquelle la benne est déchargée, car la pression et le temps d'exposition y sont plus élevés. L'usure dépend du matériau utilisé pour le fond de la benne et de la matière granulaire. Elle dépend également de la vitesse d'inclinaison de la benne, ainsi que des caractéristiques rhéologiques de la matière granulaire. Ces caractéristiques rhéologiques peuvent dépendre par exemple du taux d'humidité : on sait que le sable sec s'écoule au fur et à mesure de la montée de la benne tandis que le sable humide, plus sensible au tassement, s'écoule en plusieurs blocs qui se détachent de la masse principale. Le terme « matière granulaire » englobe ici toute matière granulaire, quelle que soit son origine et sa nature, minérale ou organique, qui est habituellement transportée dans des bennes, telle que : le sable, le gravier, les cailloux, les pierres, la terre végétale, la terre de remblai, les graines et céréales, etc.

Les conditions d'écoulement rencontrées sur les bennes conduisent à une usure importante du fond des bennes. Plusieurs remèdes ont été proposés pour les bennes en acier. On peut couvrir le fond de la benne avec une feuille ou bande de caoutchouc. On a également utilisé des tôles plus résistantes à l'abrasion, par exemple en Hardox ® 400 ou 450. On peut aussi optimiser la géométrie de la benne de manière à minimiser la pression qu'exerce la matière granulaire sur les surfaces de la benne ; la benne de type tombereau est un exemple pour une telle géométrie.

US 6,007,132 (Caterpillar) décrit un élément de doublage assurant une protection contre l'abrasion de la benne d'une machine telle qu'un camion tout terrain. Cet élément de doublage comporte une plaque présentant des ouvertures et des bandes d'un matériau résistant à l'abrasion plaquées en surépaisseur. Ces ouvertures et ces bandes permettent de faire rouler le chargement plutôt que de le faire glisser ce qui associé à l'épaisseur de la plaque et à la résistance à l'abrasion du matériau utilisé pour le plaquage, permet de réduire l'abrasion de la caisse. Le matériau utilisé pour réaliser les bandes plaquées en surépaisseur contient préférentiellement du carbure de chrome. Les bandes plaquées ont une épaisseur préférée de 10 mm.

Il existe par ailleurs des brevets décrivant des fonds de benne, généralement de camionnettes de type « pick-up truck », pour lesquelles la benne n'est pas basculante.

WO 01/66301 (Pullman industries) décrit un élément de benne comportant des nervures formées par laminage, d'orientation généralement parallèle avec ledit élément de benne. Cet élément est typiquement une « tôle ondulée ». L'extrémité de ces nervures est emboutie de façon à réaliser une pente progressive permettant de relier ces nervures aux extrémités plates de la benne.

US 2003/218360 (Anderson) décrit également des éléments de benne comprenant une « tôle ondulée » obtenue par formage entre cylindres utilisés dans des « pick-up trucks ». Ces tôles ondulées présentent un relief sur les deux faces et sont délicates à raccorder aux autres éléments de la benne.

Les solutions décrites ci-dessus sont coûteuses et nécessitent une conception complexe et une fabrication rendue difficile par le nombre de composants à assembler. Par ailleurs, on souhaiterait disposer de bennes résistantes à l'abrasion qui puissent être réalisées en alliage d'aluminium, car à performance équivalente, elles sont plus légères que les bennes en acier.

Enfin, l'impression de relief sur les tôles métalliques est connue.

GB 2 381 009 (Cooper Clarke Group) décrit des surfaces anti-dérapantes comprenant des motifs en reliefs étudiés particulièrement non pas pour limiter l'abrasion, mais pour éviter le glissement des chaussures.

La présente invention a pour but de proposer une nouvelle benne pour matières granulaires de conception économique et simplifiée résistante à l'abrasion, qui peut être construite en alliage d'aluminium.

### Objet de l'invention

L'invention a pour objet une benne pour le transport, le stockage ou la manutention de matière granulaire comportant un fond et des parois latérales, **caractérisée en ce qu**'au moins une partie du fond comporte notamment une tôle ayant été imprimée d'un ou plusieurs motifs en relief sur une seule face, ladite tôle étant disposée de manière à ce que lors du transport ou lors du déchargement de la matière granulaire, ledit motif se trouve en contact avec ladite matière granulaire.

### Description des figures

La figure 1 montre une benne selon l'état de la technique réalisée en tôles et profilés en différents alliages d'aluminium.
La figure 2 montre différents motifs de tôles relief utilisables dans le cadre de la présente invention : (a) Damier 5 (abrégé D5), (b) Damier 2 (abrégé D2), (c) Grain de riz, (d) Diamant.

### Description de l'invention

La demanderesse s'est rendu compte lors des études préparatoires à la présente invention que l'amélioration de la résistance à l'usure du fond des bennes en aluminium par l'intermédiaire du développement d'alliages plus résistants à l'abrasion était assez faible..

L'inventeur a alors eu l'idée qu'une meilleure maîtrise de l'écoulement de la matière granulaire lors du déchargement pourrait permettre des gains significatifs : au lieu d'augmenter la résistance à l'usure du fond de la benne, on modifie les conditions d'écoulement de manière à diminuer l'usure que subit un matériau donné par rapport à une benne selon l'état de la technique. La solution qu'il a trouvée va à l'encontre des tendances en matière de construction des bennes : au lieu de diminuer le frottement entre le fond de la benne et la matière granulaire (en choisissant un fond lisse sur laquelle la matière granulaire « glisse bien » ou en choisissant un fond très rugueux de façon à faire « rouler » la matière granulaire), on évite ce frottement en choisissant un fond qui retient une couche de matière granulaire lors de son déversement.

La présente invention est basée sur le constat que durant la montée d'une benne, la majeure partie de la matière granulaire s'écoule non pas directement par glissement sur le fond de la benne, mais sur une couche de matière granulaire fixe dans le fond de la benne. Par conséquent, l'usure du fond de la benne est provoquée par le glissement de la dernière couche, c'est-à-dire de la couche de matière granulaire qui est effectivement en contact avec le fond de la benne. L'usure du fond de la benne liée à la force engendrée par la dernière couche, sera d'autant plus faible que cette dernière couche sera de faible épaisseur. Elle peut donc être réduite par tout moyen qui assure que lors du glissement de cette dernière couche, la force qui agit sur la surface du fond de la benne est aussi faible que possible. Un moyen permettant de retenir une couche de matière granulaire, de manière à ce que le frottement s'effectue entre les couches de matière granulaire, la couche de matière granulaire retenue par le fond rugueux étant finalement déversée et ne provoquant pas d'abrasion en raison de sa faible épaisseur, permet donc de réduire l'usure du fond de la benne.

Selon l'invention, un tel moyen est, par exemple, l'utilisation d'une tôle relief sur le fond de la benne. Selon la norme EN 12258-1, l'homme du métier entend par « tôle relief » une « tôle ayant été imprimée d'un motif en relief sur une face, par laminage », par « tôle ondulée » une « tôle, formée par laminage, de profil symétrique ou asymétrique », par « tôle gravée » une « tôle sur laquelle un motif a été imprimé en creux ou en relief, sur une ou sur les deux faces » et par « fini gaufré » un « motif imprimé mécaniquement sur une surface par laminage ou par pression ». La tôle imprimée d'un ou plusieurs motifs en relief selon l'invention pour laquelle le motif présente en général une hauteur maximale de quelques millimètres se distingue d'une « tôle ondulée » formée par laminage pour laquelle l'ondulation peut être beaucoup plus importante, pour laquelle les nervures sont parallèles au sens de laminage et qui présente une ondulation sur les deux faces de façon symétrique ou asymétrique. Le motif de la tôle relief, de la tôle gravée, et du fini gaufré est le plus souvent un motif répétitif qui s'étend sur toute la longueur et toute la largeur de la tôle. Les tôles relief, les tôles gravées et les tôles au fini gaufré sont utilisées de façon avantageuse dans le cadre de l'invention. Les tôles relief sont particulièrement avantageuses. Des tôles relief sont connues en tant que telles et ont fait l'objet d'une norme européenne EN 1386. Ces tôles sont toujours gravées sur une seule face.

Selon l'invention, ladite tôle ayant été imprimée d'un ou plusieurs motifs en relief est disposée au fond de la benne, de manière à ce que le relief soit en contact avec la matière granulaire lorsque la benne est chargée. Dans le cadre de la présente invention, le terme « fond » doit être compris comme signifiant la partie de la benne sur laquelle la matière granulaire exerce une force dirigée vers le bas (lorsque la benne est en position horizontale (position de transport), alors que le terme « paroi » doit être compris comme signifiant la partie de la benne sur laquelle la matière granulaire exerce une force plutôt horizontale. Le fond et les parois peuvent être des parties distinctes (assemblées par exemple par soudage ou boulonnage), ou représenter une seule forme galbée (assemblée ou non). Ce qui importe est qu'au moins une partie du fond de la benne, à savoir la partie sur laquelle glisse la matière granulaire lors de son déchargement, est recouverte ou constituée d'une tôle ayant été imprimée d'un ou plusieurs motifs en relief. On distingue la partie « inférieure » et la partie « supérieure » du fond de la benne, la partie inférieure étant la plus basse lorsque la benne est basculée (proche de la trappe par laquelle la matière granulaire est déchargée) et la partie supérieure étant la plus haute lorsque la benne est basculée (à l'opposé de la trappe). Selon l'invention, la tôle ayant été imprimée d'un ou plusieurs motifs en relief peut être disposée sur toute la surface du fond de la benne, ou seulement sur la partie inférieure. De manière préférée ladite tôle constitue ou recouvre au moins le tiers inférieur de la benne. L'effet technique est plus fort si ladite tôle constitue ou recouvre au moins la moitié inférieure de la benne

Selon l'invention, le relief doit être choisi tel qu'il retient la dernière couche de matière granulaire lorsque la benne est basculée pour être déchargée. A titre d'exemple, un relief comportant une pluralité des traits allongés, sensiblement linéaires ou non, convient bien. Avantageusement, une partie desdits traits allongés sont orientés à environ 90° ou plus par rapport à l'autre partie desdits traits allongés.

De tels motifs sont connus sous les désignations normalisées « Damier 2 », « Damier 5 », « Losange », « Grain d'orge », « Amande », ainsi que sous d'autres désignations telles que « Grain de riz », « Diamants », « Pomme de pin », « Damier 3 » (dérivé du Damier 2 avec trois traits parallèles au lieu de 2), « Damier 4 » (dérivé du Damier 5 avec 4 traits parallèles au lieu de cinq). Toutes ces désignations décrivent de manière succincte et figurée la forme du motif. Les tôles de type damier sont appelées aussi D2, D3, D4, D5, selon le nombre de traits parallèles qui constituent le motif. A titre d'exemple, un motif qui convient à la réalisation de la présente invention est celui décrit dans le brevet français FR 2 747 948 (Pechiney Rhenalu)

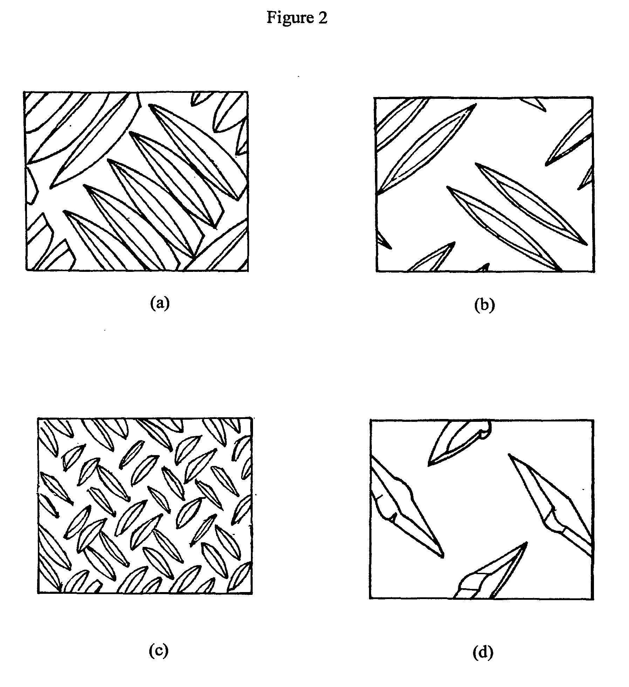

Dans le cadre de la présente invention, on préfère disposer la tôle de manière à ce que les traits soient orientés à environ 45° par rapport à la direction d'écoulement de la matière granulaire lors de son déchargement (appelé ici « direction d'écoulement »). On peut également utiliser des tôles relief dont le motif est constitué de plots de forme (vu du haut) plus ou moins circulaire. La figure 2 montre quatre motifs préférés dans le cadre de la présente invention. La longueur des traits peut être comprise entre environ 0,5 cm et environ 15 cm.

Un des avantages de la présente invention est que la solution, à savoir l'utilisation de tôles relief au fond de la benne, est basée sur l'utilisation de produits standards disponibles dans le commerce, réalisés dans des alliages très similaires à ceux utilisés en construction de véhicules industriels, et dont la mise en oeuvre (telle que la découpe, le pliage, le soudage) ne pose pas de problème particulier ou inhabituel. Cette solution n'engendre donc pas de surcoût significatif. Ces alliages utilisés pour les tôles relief peuvent être de l'acier ou, de manière préférée, un alliage d'aluminium, tel qu'un alliage de la série 5xxx. Les alliages de type Al-Zn-Mg sans cuivre de la série 7xxx, tels que le 7020, et les alliages de la série 6xxx, tels que le 6061, conviennent également. La benne selon l'invention peut être réalisée de manière à ce que ladite tôle imprimée constitue ou recouvre la totalité de la surface du fond de la benne, ou seulement une partie dudit fond sur laquelle glisse la matière granulaire lors de son déchargement. Cette partie peut être située proche de l'ouverture à travers laquelle la matière granulaire glisse lors du déchargement de la benne.

L'abrasion du fond de la benne est diminuée encore plus si la taille moyenne de grains de la matière granulaire transportée ou stockée ne dépasse pas la hauteur du motif. Par ailleurs, l'avantage de l'invention est plus net avec le sable humide qu'avec le sable sec, comme montré dans l'exemple 2.

Selon un mode de réalisation de l'invention, le fond de la benne est constitué de tôle ayant été imprimée d'un ou plusieurs motifs en relief. Selon un autre mode de réalisation, ladite tôle imprimée couvre le fond de la benne qui peut être fabriquée à partir d'une tôle lisse à base d'aluminium ou d'autres matériaux tels que l'acier.

Dans les exemples qui suivent, on décrit à titre d'illustration des modes de réalisation avantageux de l'invention. Ces exemples n'ont pas de caractère limitatif.

### Exemples

### Exemple 1 :

Dans cet essai, on a exploré le déversement de sable sur une benne réalisée à l'échelle 1/20. La benne consiste en une boîte rectangulaire en plexiglass dont le fond est constitué d'une tôle en aluminium. Elle est montée sur un banc d'essais permettant, à l'aide d'un vérin hydraulique motorisé, de basculer la benne. En tant que fond, on choisit la tôle dont on veut étudier l'influence sur les conditions d'écoulement du sable. Cette tôle de fond a une longueur de 60 cm et une largeur de 25 cm. Comme dans une benne réelle, la paroi latérale par laquelle le sable s'écoule peut s'ouvrir par basculement sous la pression du sable. La masse de sable totale est comprise entre 25 et 30 kg. L'essai est effectué de la manière suivante : on charge le sable, on bascule progressivement la benne avec une vitesse constante, pendant qu'on enregistre la séquence du déversement du sable avec une caméra vidéo de manière à pourvoir relever à chaque moment l'angle de la benne (a) et l'épaisseur de la couche de sable, à l'aide de règles graduées placées sur les parois). On relève notamment l'angle de début d'écoulement et l'épaisseur de la couche de sable à ce moment, ainsi que l'angle (appelé angle de glissement) et l'épaisseur de la couche de sable au moment où la couche de sable en contact direct avec le fond de la benne commence à glisser.

Deux types de sables ont été utilisés, du sable fin avec un diamètre moyen de l'ordre de 0,5 mm, et du sable gros avec un diamètre moyen de l'ordre de 1,7 mm. Par ailleurs, un gravier avec une taille de grain de 5 à 20 mm a été testé.

Les essais ont été effectués avec cinq tôles différentes en alliage d'aluminium. Une plaque lisse a servi d'étalonnage pour les résultats. Quatre motifs différents ont été testés, le Grain de Riz, le Damier 2 (D2), le Damier 5 (D5) et le Diamant, avec deux orientations de motifs différentes (45° et 90°) par rapport au flux de sable. Ces motifs se distinguent par leur forme et leur géométrie. Les motifs du D5 couvrent moins de surface sur la plaque que ceux du Grain de Riz, mais sont plus hauts (2 mm pour le D5, 0,5 mm pour le Grain de Riz). Le tableau 1 montre la valeur de l'angle de glissement (angle de décrochement) de la dernière couche en contact (à 21 cm de la trappe par laquelle le sable est déversé).

**Tableau 1**

| Angle de glissement de la dernière couche, à 21 cm de la trappe | | | | | | | |
|---|---|---|---|---|---|---|---|
| Type de fond | Tôle lisse | D2 | Diamant | Tôle D5 | | Tôle Grain de riz | |
| Orientation des aspérités | | 45° | 45° | 45° | 90° | 45° | 90° |
| Moyenne obtenue avec le sable gros (sec) | 25,3 | 32,75 | 30,89 | 31,75 | 31,25 | 31,75 | 30,5 |
| Ecart-type Réalisé sur 2 essais | 0,45 | 0,29 | 0,29 | 0,29 | 0,50 | 0,50 | 0,41 |
| Moyenne obtenue avec le sable fin (sec) | 28,00 | 36,83 | 35,50 | 36,83 | 36,33 | 36,38 | 35,00 |
| Ecart-type Réalisé sur 2 essais | 0,87 | 0,29 | 0,50 | 0,29 | 0,29 | 0,48 | 0,50 |
| Moyenne obtenue avec le gravier | 23,75 | 32,63 | 32,33 | 33,00 | - | 32,25 | - |
| Ecart-type Réalisé sur 2 essais | 0,50 | 0,63 | 0,29 | 0,50 | - | 0,29 | - |

On note l'excellente reproductibilité (écart-type inférieur à 2%) de ces essais : deux essais reproduits dans les mêmes conditions donnent le même résultat à l'intérieur d'un intervalle de 0,5° environ. On observe que les graviers glissent sur les tôles lisses, mais roulent sur les tôles relief. On effectue les mêmes essais avec une vitesse de montée deux fois supérieure ou inférieure, et cela n'influe pas sur le résultat.

Le tableau 2 montre l'épaisseur de sable de la dernière couche avant son glissement. On constate que l'utilisation d'une tôle relief comme fond de la benne conduit à une réduction de cette couche (entre 55% et 75% de diminution pour le sable gros, et entre 65% et 85% pour le sable fin).

**Tableau 2**

| Epaisseur de sable de la dernière couche avant glissement, à 21 cm de la trappe (en cm) | | | | | |
|---|---|---|---|---|---|
| Type de fond | Tôle lisse | Tôle D5 | | Tôle Grain de riz | |
| Orientation des aspérités | | 45° | 90° | 45° | 90° |
| Moyenne obtenue avec le sable gros (sec) | 2,04 | 0,50 | 0,67 | 0,75 | 0,92 |
| Ecart-type Réalisé sur 2 essais | 0,39 | 0,00 | 0,14 | 0,00 | 0,14 |
| Moyenne obtenue avec le sable fin (sec) | 1,75 | 0,50 | 0,50 | 0,25 | 0,58 |
| Ecart-type Réalisé sur 2 essais | 0,43 | 0,00 | 0,00 | 0,00 | 0,14 |

L'épaisseur *h* de sable restant lors du glissement de la dernière couche et l'angle α de glissement de la dernière couche permettent de calculer la pression normale *Fₙ* sur le fond de la benne, suivant la formule *Fₙ* = ρ *g h cos* α*,* où *g* a la valeur de 9,81 N.m⁻¹ et ρ est la masse volumique du sable (2650 kg m⁻³).

Le tableau 3 montre le résultat de ces calculs.

**Tableau 3**

| Pression normale lors du début de glissement de la dernière couche [Nm⁻²] et réduction de cette force par rapport à une tôle lisse [%] | | | | | |
|---|---|---|---|---|---|
| Type de fond | Tôle lisse | Tôle D5 | | Tôle Grain de Riz | |
| Orientation des motifs | | 45° | 90° | 45° | 90° |
| (aspérités) | | | | | |
| Force normale, Moyenne obtenue avec le sable gros (sec) | 50 Nm⁻² | 11,5 Nm⁻² | 15,5 Nm⁻² | 17,5 Nm⁻² | 21,5 Nm⁻² |
| Réduction par rapport à une tôle lisse | - | 77% | 69% | 65% | 57% |
| Force normale, Moyenne obtenue avec le sable fin (sec) | 50 Nm⁻² | 13 Nm⁻² | 13 Nm⁻² | 6,5 Nm⁻² | 15,5 Nm⁻² |
| Réduction par rapport à une tôle lisse | - | 74% | 74% | 87% | 69% |

La pression normale *Fₙ* lors du frottement régissant les paramètres de l'usure du fond de benne, il est évident que pour le sable sec, la durée de vie du fond de la benne est supérieure si l'on utilise un fond de benne en tôle relief. L'orientation des motifs par rapport à la direction de l'écoulement permet de diminuer encore un peu plus les efforts normaux et donc l'usure. Ainsi, on préfère pour les tôles D5 et Grain de Riz une orientation à 45° à une orientation à 90°.

La comparaison entre les résultats obtenus avec la tôle D5 et la tôle Grain de Riz fait apparaître une corrélation entre les conditions d'écoulement et le rapport entre le diamètre moyen de grains de la matière granulaire et la hauteur du motif. Si le diamètre moyen des grains est similaire ou plus grand que la hauteur des motifs, les efforts normaux sur le fond sont plus importants que dans le cas où les grains sont plus petits que la hauteur du motif. Le tableau 4 montre des résultats complémentaires obtenus avec une tôle D5 dans les mêmes conditions que celles qui ont donné lieu aux résultats du tableau 1, sauf que pour l'une des tôles, le motif a été rectifié pour diminuer sa hauteur de 2 à 0,5 mm. On constate que pour le sable gros, l'angle de glissement ne dépend pas de la hauteur du motif, tant que cette hauteur ne dépasse pas de manière significative la taille moyenne de grains alors que lorsque la taille moyenne de grain du sable est inférieure à la hauteur du motif, l'angle de glissement augmente avec la hauteur du motif.

**Tableau 4**

| Angle de glissement de la dernière couche, à 21 cm de la trappe | | |
|---|---|---|
| Type de fond | Tôle D5 | Tôle D5 |
| Orientation des aspérités | 90° | 90° |
| Hauteur des motifs | 2 mm | 0,5 mm |
| Moyenne obtenue avec le sable gros (sec) | 31,25° | 31° |
| Ecart-type Réalisé sur 2 essais | 0,50 | 0,41 |
| Moyenne obtenue avec le sable fin (sec) | 36,33° | 34,9° |
| Ecart-type Réalisé sur 2 essais | 0,29 | 0,42 |

### Exemple 2 :

Dans cet exemple, on a répété l'essai de l'exemple 1 avec du sable humide tassé. Le tassement n'a que très peu d'effet sur le sable sec. En revanche, il s'est avéré que le tassement était un paramètre primordial pour les essais avec du sable humide. Les efforts de cohésion entre les grains dus à la capillarité sont très importants et entraînent une grande dispersion dans les résultats. Ces résultats sont résumés dans le tableau 5. Bien que dispersés, ces résultats sont très nets. Par ailleurs, on observe que dans une benne avec un fond lisse, le sable se détache du talus (extrémité du tas de sable du côté de la trappe) par plusieurs plaques, alors que dans une benne avec fond en tôle relief, ce détachement par tranches se fait en laissant une couche fixe dans le fond de la benne. Cette couche fixe ne se détache qu'en toute fin de déversement et diminue considérablement l'abrasion du fond de la benne.

Plus le sable humide est tassé, plus l'angle de glissement de la dernière couche est élevé. L'effet de la tôle relief sur le fond de la benne est encore plus important pour le sable humide que pour le sable sec : le décrochement par plaques limite encore plus les effets normaux qu'un écoulement continu observé avec le sable sec. De plus, l'utilisation de sable humide est plus proche des conditions réelles d'utilisation d'une benne dans les cimenteries et carrières.

**Tableau 5**

| Angle de glissement de la dernière couche, à 21 cm de la trappe | | | | | |
|---|---|---|---|---|---|
| Type de fond | Tôle lisse | Tôle D5 | | Tôle Grain de riz | |
| Orientation des aspérités | | 45° | 90° | 45° | 90° |
| Moyenne obtenue avec le sable gros (humide) | 32 | 50,5 | 59,8 | 52,8 | 53,6 |
| Ecart-type | 6,25 | 10,7 | 19,7 | 11,1 | 14,7 |
| Moyenne obtenue avec le sable fin (humide) | 37 | 52,3 | 60,5 | 53,1 | 56,7 |
| Ecart-type | 6,8 | 10,9 | 18,8 | 10,7 | 12 |

### Exemple 3 :

Dans cet exemple, on a étudié l'effet de l'utilisation d'une tôle gravée de type D5, orientée à 45° par rapport à l'écoulement de la matière granulaire, pour une partie seulement du fond de la benne, l'autre partie dudit fond étant réalisée à l'aide d'une tôle lisse. Le sable utilisé est le sable dit gros défini dans l'exemple 1. Il a été utilisé à l'état sec. Cinq configurations de fond de benne ont été testées : tôle lisse, tôle gravée, tôle dont les 2/3 inférieurs sont lisses et le 1/3 supérieur est gravé, tôle dont le 1/3 inférieur est gravé et les 2/3 supérieurs sont lisses, tôle dont les 2/3 inférieurs sont gravés et le 1/3 supérieur est lisse. Les configurations mixtes, c'est à dire comportant des tôles lisses et des tôles gravées, sont réalisées à partir de sections indépendantes mises bout à bout.

Les essais sont exécutés et interprétés de la même façon que dans les exemples précédents. Les résultats obtenus sont rapportés dans le Tableau 6.

**Tableau 6**

| Angle de glissement de la dernière couche, à 21 cm de la trappe | | | | | |
|---|---|---|---|---|---|
| Tôle | Lisse | Gravée | 2/3 inférieurs lisses 1/3 supérieur gravé | 1/3 inférieur gravé 2/3 supérieurs lisses | 2/3 inférieurs gravés 1/3 supérieur lisse |
| Angle de glissement de la dernière couche, à 21 cm de la trappe | 24,9 | 34,9 | 27,1 | 31,2 | 34,9 |
| Ecart-type Réalisé sur 5 essais | 0,4 | 0,2 | 0,2 | 0,6 | 0,2 |

Les résultats montrent clairement qu'un recouvrement même partiel du fond de la benne modifie de façon appréciable les conditions d'écoulement de la matière granulaire. Ainsi un recouvrement des 2/3 inférieurs à l'aide d'une tôle gravée permet d'obtenir des résultats identiques à ceux obtenus avec un recouvrement total. Un recouvrement du 1/3 inférieur avec de la tôle gravée modifie significativement l'angle de glissement sans modifier l'épaisseur de sable restant. Dans ce cas le sable descendant de la partie supérieure lisse reste bloqué sur la tôle gravée. Un recouvrement du 1/3 supérieur par de la tôle gravée a enfin un léger effet mais celui ci est peu significatif.

## Revendications

1. Benne pour le transport, le stockage ou la manutention de matière granulaire comportant un fond et des parois latérales, **caractérisée en ce qu'**au moins une partie du fond comporte une tôle ayant été imprimée d'un ou plusieurs motifs en relief sur une seule face, ladite tôle étant disposée de manière à ce que lors du transport ou lors du déchargement de la matière granulaire, ledit motif se trouve en contact avec ladite matière granulaire.

2. Benne selon la revendication 1, **caractérisée en ce que** ledit motif est un motif répétitif.

3. Benne selon la revendication 1 ou 2, **caractérisée en ce que** ledit motif comporte des traits allongés.

4. Benne selon la revendication 3, **caractérisée en ce qu'**une partie desdits traits allongés sont orientés à environ 90° par rapport à l'autre partie desdits traits allongés.

5. Benne selon une quelconque des revendications 2 à 4, **caractérisée en ce que** ledit motif est sélectionné dans le groupe constitué des motifs connus sous les désignations normalisées Damier 2, Damier 5, Grain d'Orge, Diamant, Amande.

6. Benne selon une quelconque des revendications 2 à 4, **caractérisée en ce que** ledit motif est sélectionné dans le groupe constitué des motifs Damier 3, Damier 4, Grain de Riz.

7. Benne selon une quelconque des revendications 2 à 4, **caractérisée en ce que** ledit motif est sélectionné dans le groupe constitué des motifs Damier 5, Damier 2, Grain de riz, Diamant.

8. Benne selon une quelconque des revendications 3 à 7, **caractérisée en ce que** la longueur de chacun desdits motifs est comprise entre 0,5 cm et 15 cm.

9. Benne selon une quelconque des revendications 3 à 8, **caractérisée en ce que** lesdits traits sont orientés à environ 45° par rapport à la direction d'écoulement de la matière granulaire lors du déchargement de la benne par basculement de la benne et glissement de la matière granulaire à travers une ouverture prévue dans le fond.

10. Benne selon une quelconque des revendications 3 à 8, **caractérisée en ce que** lesdits traits sont orientés à environ 45° par rapport à la direction d'écoulement de la matière granulaire lors du déchargement de la benne par basculement de la benne et glissement de la matière granulaire à travers une ouverture prévue dans une des parois latérales.

11. Benne selon une quelconque des revendications 1 à 10, **caractérisée en ce que** ladite tôle est une tôle relief ayant été imprimée par laminage.

12. Benne selon une quelconque des revendications 1 à 10, **caractérisée en ce que** ladite tôle est une tôle gravée.

13. Benne selon une quelconque des revendications 1 à 10, **caractérisée en ce que** la dite tôle est une tôle au fini gaufré dont le motif a été imprimé par pression ou laminage

14. Benne selon une quelconque des revendications 1 à 13, **caractérisée en ce que** ladite tôle est en acier ou en alliage d'aluminium.

15. Benne selon la revendication 14, **caractérisée en ce que** ladite tôle est en alliage d'aluminium de la série 5xxx.

16. Benne selon la revendication 14, **caractérisée en ce que** ladite tôle est en alliage Al-Zn-Mg sans cuivre de la série 7xxx, et préférentiellement en alliage 7020.

17. Benne selon la revendication 14, **caractérisée en ce que** ladite tôle est en alliage de la série 6xxx, et préférentiellement en alliage 6061.

18. Benne selon une quelconque des revendications 1 à 17, **caractérisée en ce que** la totalité de la surface dudit fond de la benne, ou seulement une partie de la surface dudit fond sur laquelle glisse la matière granulaire lors de son déchargement comporte notamment ladite tôle.

19. Benne selon la revendication 18, **caractérisée en ce que** la partie de la surface dudit fond qui comporte notamment ladite tôle est au moins le 1/3 inférieur situé proche de l'ouverture à travers laquelle la matière granulaire glisse lors du déchargement de la benne par basculement.

20. Utilisation d'une benne selon une quelconque des revendications 1 à 19 pour le transport de matière granulaire, **caractérisée en ce que** la taille moyenne de grains de ladite matière granulaire ne dépasse pas la hauteur dudit motif.

## Claims

1. Skip for transporting, storing or handling granular material, comprising a bottom and lateral walls, **characterised in that** at least a portion of the bottom comprises a sheet having been impressed with one or more embossed patterns on a single face, said sheet being arranged so that during the transport or during the unloading of the granular material, said pattern is in contact with said granular material.

2. Skip according to claim 1, **characterised in that** said pattern is a repeating pattern.

3. Skip according to claim 1 or 2, **characterised in that** said pattern comprises elongated lines.

4. Skip according to claim 3, **characterised in that** a portion of said elongated lines are oriented at approximately 90º in relation to the other portion of said elongated lines.

5. Skip according to any of claims 2 to 4, **characterised in that** said pattern is selected from the group consisting of patterns known by the standard designations of Check 2, Check 5, Barley Corn, Diamond, Almond.

6. Skip according to any of claims 2 to 4, **characterised in that** said pattern is selected from the group consisting of the patterns Check 3, Check 4, Rice Grain.

7. Skip according to any of claims 2 to 4, **characterised in that** said pattern is selected from the group consisting of the patterns Check 5, Check 2, Rice Grain, Diamond.

8. Skip according to any of claims 3 to 7, **characterised in that** the length of each of said patterns ranges between 0.5 cm and 15 cm.

9. Skip according to any of claims 3 to 8, **characterised in that** said lines are oriented at approximately 45º in relation to the direction of flow of the granular material when it is being unloaded from the skip via tilting of the skip and sliding of the granular material through an opening provided in the bottom.

10. Skip according to any of claims 3 to 8, **characterised in that** said lines are oriented at approximately 45º in relation to the direction of flow of the granular material when it is being unloaded from the skip via tilting of the skip and sliding of the granular material through an opening provided in one of the lateral walls.

11. Skip according to any of claims 1 to 10, **characterised in that** said sheet is an embossed sheet having been impressed via rolling.

12. Skip according to any of claims 1 to 10, **characterised in that** said sheet is an engraved sheet.

13. Skip as claimed in any of claims 1 to 10, **characterised in that** said sheet is an embossed-finish sheet whose pattern has been impressed via pressure or rolling.

14. Skip according to any of claims 1 to 13, **characterised in that** said sheet is made of steel or an aluminium alloy.

15. Skip according to claim 14, **characterised in that** said sheet is made of aluminium alloy of the 5xxx series.

16. Skip according to claim 14, **characterised in that** said sheet is made of a copper-free, Al-Zn-Mg alloy of the 7xxx series, and preferably a 7020 alloy.

17. Skip according to claim 14, **characterised in that** said sheet is made of a 6xxx series alloy, and preferably a 6061 alloy.

18. Skip according to any of claims 1 to 17, **characterised in that** the entire surface of said bottom of the skip, or only a portion of the surface of said bottom over which the granular material slides when being unloaded, comprises in particular said sheet.

19. Skip according to claim 18, **characterised in that** the portion of the surface of said bottom that comprises in particular said sheet is at least the lower 1/3 situated close to the opening through which the granular material slides when being unloaded from the skip via tilting.

20. Use of a skip according to any of claims 1 to 19 for transporting granular material, **characterised in that** the average grain size of said granular material does not exceed the height of said pattern.

## Patentansprüche

1. Behälter für Transport, Lagerung oder Handhabung von körnigem Material mit einem Boden und Seitenwänden, **dadurch gekennzeichnet, dass** zumindest ein Teil des Bodens ein Blech aufweist, dem auf einer Seite ein oder mehrere erhabene Muster aufgeprägt wurden, wobei das Blech so angeordnet ist, dass sich das Muster beim Transport oder beim Entladen des körnigen Materials im Kontakt mit dem körnigen Material befindet.

2. Behälter nach Anspruch 1, **dadurch gekennzeichnet, dass** das Muster ein sich wiederholendes Muster ist.

3. Behälter nach Anspruch 1 oder 2, **dadurch gekennzeichnet, dass** das Muster längliche Striche aufweist.

4. Behälter nach Anspruch 3, **dadurch gekennzeichnet, dass** ein Teil der länglichen Striche in etwa 90° zum anderen Teil der länglichen Striche ausgerichtet ist.

5. Behälter nach irgendeinem der Ansprüche 2 bis 4, **dadurch gekennzeichnet, dass** das Muster ausgewählt ist aus der Gruppe bestehend aus den Mustern, die unter den genormten Bezeichnungen Schachbrettmuster 2, Schachbrettmuster 5, Gerstenkornmuster, Diamantmuster, Mandelmuster bekannt sind.

6. Behälter nach irgendeinem der Ansprüche 2 bis 4, **dadurch gekennzeichnet, dass** das Muster ausgewählt ist aus der Gruppe bestehend aus den Mustern Schachbrettmuster 3, Schachbrettmuster 4, Reiskornmuster.

7. Behälter nach irgendeinem der Ansprüche 2 bis 4, **dadurch gekennzeichnet, dass** das Muster ausgewählt ist aus der Gruppe bestehend aus den Mustern Schachbrettmuster 5, Schachbrettmuster 2, Reiskornmuster, Diamantmuster.

8. Behälter nach irgendeinem der Ansprüche 3 bis 7, **dadurch gekennzeichnet, dass** die Länge jedes der Muster zwischen 0,5 cm und 15 cm beträgt.

9. Behälter nach irgendeinem der Ansprüche 3 bis 8, **dadurch gekennzeichnet, dass** die Striche in etwa 45° zur Fließrichtung des körnigen Materials beim Entladen des Behälters durch Kippen des Behälters und Gleiten des körnigen Materials durch eine im Boden vorgesehene Öffnung ausgerichtet sind.

10. Behälter nach irgendeinem der Ansprüche 3 bis 8, **dadurch gekennzeichnet, dass** die Striche in etwa 45° zur Fließrichtung des körnigen Materials beim Entladen des Behälters durch Kippen des Behälters und Gleiten des körnigen Materials durch eine in einer der Seitenwände vorgesehene Öffnung ausgerichtet sind.

11. Behälter nach irgendeinem der Ansprüche 1 bis 10, **dadurch gekennzeichnet, dass** das Blech ein Blech mit eingewalzten Mustern ist, die durch Walzen aufgeprägt wurden.

12. Behälter nach irgendeinem der Ansprüche 1 bis 10, **dadurch gekennzeichnet, dass** das Blech ein geprägtes Blech ist.

13. Behälter nach irgendeinem der Ansprüche 1 bis 10, **dadurch gekennzeichnet, dass** das Blech ein Blech in Präge-Finish ist, dessen Muster durch Drücken oder Walzen aufgeprägt wurde.

14. Behälter nach irgendeinem der Ansprüche 1 bis 13, **dadurch gekennzeichnet, dass** das Blech aus Stahl oder aus Aluminiumlegierung ist.

15. Behälter nach Anspruch 14, **dadurch gekennzeichnet, dass** das Blech aus einer Aluminiumlegierung der Serie 5xxx ist.

16. Behälter nach Anspruch 14, **dadurch gekennzeichnet, dass** das Blech aus einer Al-Zn-Mg-Legierung ohne Kupfer der Serie 7xxx und vorzugsweise aus der Legierung 7020 ist.

17. Behälter nach Anspruch 14, **dadurch gekennzeichnet, dass** das Blech aus einer Aluminiumlegierung der Serie 6xxx und vorzugsweise aus der Legierung 6061 ist.

18. Behälter nach irgendeinem der Ansprüche 1 bis 17, **dadurch gekennzeichnet, dass** die gesamte Oberfläche des Behälterbodens oder nur ein Teil der Bodenoberfläche, auf der das körnige Material bei seinem Entladen gleitet, insbesondere das genannte Blech aufweist.

19. Behälter nach Anspruch 18, **dadurch gekennzeichnet, dass** der Teil der Bodenoberfläche, der insbesondere das genannte Blech aufweist, mindestens das untere Drittel in der Nähe der Öffnung ist, durch welche das körnige Material beim Entladen des Behälters durch Kippen gleitet.

20. Verwendung eines Behälters nach irgendeinem der Ansprüche 1 bis 19 für den Transport von körnigem Material, **dadurch gekennzeichnet, dass** die mittlere Korngröße des körnigen Materials die Höhe des Musters nicht übersteigt.
